# EUROPEAN PATENT APPLICATION

(11) **EP 4 496 077 A1**
(43) Date of publication of application: **22.01.2025**
(21) Application number: 24189743.8
(22) Date of filing: 19.07.2024
(51) Int. Cl.: H01M 10/613, H01M 10/48, H01M 10/653, H01M 10/6554, H01M 10/6567, H01M 50/209, H01M 50/383, H01M 50/609, H01M 10/6556, A62C 3/16

(54) **BATTERY PACK**

(30) Priority: 20.07.2023 KR 20230094578
(71) Applicant: SAMSUNG SDI CO., LTD., Giheung-gu Yongin-si, Gyeonggi-do 17084 (KR)
(72) Inventor: KIM, Bo Hoon, 17084 Yongin-si (KR)
(74) Representative: Marks & Clerk LLP

(57) **Abstract**

A battery pack (10) configured to suppress a fire by spraying a coolant from above or submerging at least a portion of the battery pack in the coolant in response to a fire occurring in the battery pack. In response to a fire occurring in a battery pack, a coolant may be sprayed from above to serve as a sprinkler. The fire may be extinguished and heat propagation may be suppressed by submerging at least a portion of the battery pack in the coolant. Since the fire may be extinguished immediately and the heat propagation may be prevented even when a battery cell reaches thermal runaway, safety of the battery pack may be improved.

## Description

### BACKGROUND

### 1. Field

An embodiment of the present disclosure relates to a battery pack in which fire suppression may be performed by spraying a coolant from above or submerging at least a portion of the battery pack in the coolant when a fire occurs in the battery pack.

### 2. Description of the Related Art

Generally, a battery pack includes a plurality of battery cells, a bus bar which electrically connects the battery cells to the outside, and a circuit board electrically connected to the bus bar and having various circuits and components mounted thereon.

The plurality of battery cells can be arranged on a carrier plate. The carrier plate can support a weight of the battery cells and cool the battery cells. For example, a coolant can lower the heat of the battery cells by absorbing heat from the battery cells while flowing along a flow path of the carrier plate. However, a structure which cools only lower portions of the battery cells has the problem of being insufficient to prevent thermal runaway and heat propagation of the battery cells if a fire occurs, which may cause the temperature to increase up to 1000 °C.

The above-described information disclosed in the background technology of the present disclosure is only for improving understanding of the background of the present disclosure, and accordingly, may include information that does not constitute the related art.

### SUMMARY

An embodiment of the present disclosure relates to a battery pack in which fire suppression can be performed by spraying a coolant from above or submerging at least a portion of the battery pack in the coolant when a fire occurs in the battery pack.

A battery pack according to an embodiment of the present disclosure includes: battery cells including vent holes (e.g. a plurality of battery cells including a plurality of vent holes); an upper cooling unit on the battery cells that is filled with (e.g. includes) a coolant and includes spray holes (e.g. a plurality of spray holes) corresponding to the vent holes (e.g. the plurality of vent holes of the plurality of battery cells); and a lower cooling unit in contact with a lower portion of the battery cell (e.g. the plurality of battery cells) and filled with (e.g. including) the coolant. The spray holes (e.g. the plurality of spray holes) in the upper cooling unit to correspond to the vent holes of the battery cells (e.g. the plurality of vent holes of the plurality of battery cells), and the upper cooling unit is configured to spray the coolant through a spray hole (e.g. a spray hole of the plurality of spray holes) corresponding to a battery cell where a fire occurs (e.g. in response to a fire occurring in a corresponding battery cell of the plurality of battery cells).

The upper cooling unit may be in contact with the battery pack (e.g. the plurality of battery cells).

The spray holes may have larger diameters than the vent holes.

The spray hole corresponding to the battery cell where the fire occurs may be opened when the fire occurs in the battery cell (e.g. the spray hole may be configured to open in response to the fire occurring in the corresponding battery cell).

The spray hole may be configured to be opened by (e.g. in response to) heat of a vent gas ejected from a vent hole (e.g. a vent hole of the plurality of vent holes) of the battery cell where the fire occurs.

The coolant may be propylene glycol.

The battery pack may further include a fire detection unit configured to detect a temperature increase of the battery pack (e.g. of at least one of the plurality of battery cells) and/or generation of combustion gas.

A battery pack according to an embodiment of the present disclosure includes: battery cells (e.g. a plurality of battery cells); a case accommodating the battery cells; a coolant inlet in one side surface of the case; and a coolant outlet in another side surface of the case. A coolant is introduced into the case through the coolant inlet and thus at least portions of the battery cells are submerged (e.g. the battery pack is configured to introduce a coolant into the case through the coolant inlet and to submerge at least portions of the battery cells in the coolant) when a fire occurs in the battery cell (e.g. in response to a fire occurring in a battery cell of the plurality of battery cells).

The battery pack (e.g. the plurality of battery cells) may be spaced apart from a bottom surface of the case by a preset height.

The coolant may be filled in the case to the preset height from the bottom surface of the case when no fire occurs, and the coolant may be in contact with a bottom surface of the battery pack (e.g. the plurality of battery cells).

The preset height may be the same as a thickness of the battery cell with respect to a direction in which the plurality of battery cells are aligned.

A height of the case may be higher than a height of the battery cell, and the entire case may be submerged with respect to the height of the battery cell when the fire occurs in the battery cell (e.g. the battery pack may be configured to submerge an entirety of the height of the battery cell in the coolant in response to the fire occurring in the battery cell).

Approximately one-third to approximately one-half of the battery cell may be submerged with respect to a height of the battery cell when the fire occurs (e.g. in response to a fire occurring) in the battery cell.

The coolant may be propylene glycol.

The battery pack may further include a fire detection unit configured to detect a temperature increase of the battery pack (e.g. the plurality of battery cells) and/or generation of combustion gas.

At least some of the above and other features of the invention are set out in the claims.

### BRIEF DESCRIPTION OF THE DRAWINGS

FIG. 1 is an exploded perspective view illustrating a battery pack according to one embodiment of the present disclosure.
FIG. 2 is a diagram illustrating battery cells and an upper cooling unit in a state in which a fire occurs.
FIG. 3 is a perspective view illustrating a battery pack according to another embodiment of the present disclosure.
FIG. 4 is a cross-sectional view of FIG. 3.
FIG. 5 is a perspective view illustrating a battery pack according to a further embodiment of the present disclosure.

### DETAILED DESCRIPTION

The embodiments of the present disclosure are provided to more completely describe the present disclosure to those skilled in the art, the following embodiments may be modified into various other forms, and the scope of the present disclosure is not limited to the following embodiments. Rather, these embodiments are provided to make the present disclosure more meaningful and complete.

Further, in the following drawings, the thickness and size of each layer are exaggerated for convenience and clarity of description, and the same reference numerals indicate the same elements in the drawings. As used in the present specification, the term "and/or" includes any one of and all combinations of one or more of the listed items. Further, the meaning of being "connected" in the present specification refers to not only a case in which member A and member B are directly connected, but also a case in which member C is interposed between member A and member B to indirectly connect member A and member B.

The terms used in the present specification are used to describe specific embodiments and are not intended to limit the present disclosure. As used in the present specification, a singular form may include a plural form unless the context clearly indicates otherwise. Further, when used in the present specification, "comprise," "include," "comprising," and/or "including" specifies the presence of mentioned features, numbers, steps, operations, members, elements and/or groups thereof, and does not exclude the presence or addition of one or more other features, numbers, operations, members, elements and/or groups.

Although the terms "first," "second," and the like are used in the present specification to describe various members, components, regions, layers and/or parts, it is obvious that these members, components, regions, layers and/or parts should not be limited by these terms. These terms are used only to distinguish one member, component, region, layer, or part from another member, component, region, layer, or part. Accordingly, a first member, component, region, layer, or part to be described later may be referred to a second member, component, region, layer, or part without departing from the teachings of the present disclosure.

Spatially related terms such as "beneath," "below," "lower," "above," and "upper" are used for easy understanding of one element or feature and another element or feature shown in the drawings. These spatially related terms are provided for easy understanding of the present disclosure according to various process states or usage states of the present disclosure, and are not intended to limit the present disclosure. For example, when the elements or features in the drawings are reversed, an element described as "lower" or "below" "becomes "upper" or "above." Accordingly, "below" is a concept encompassing "above" or "below."

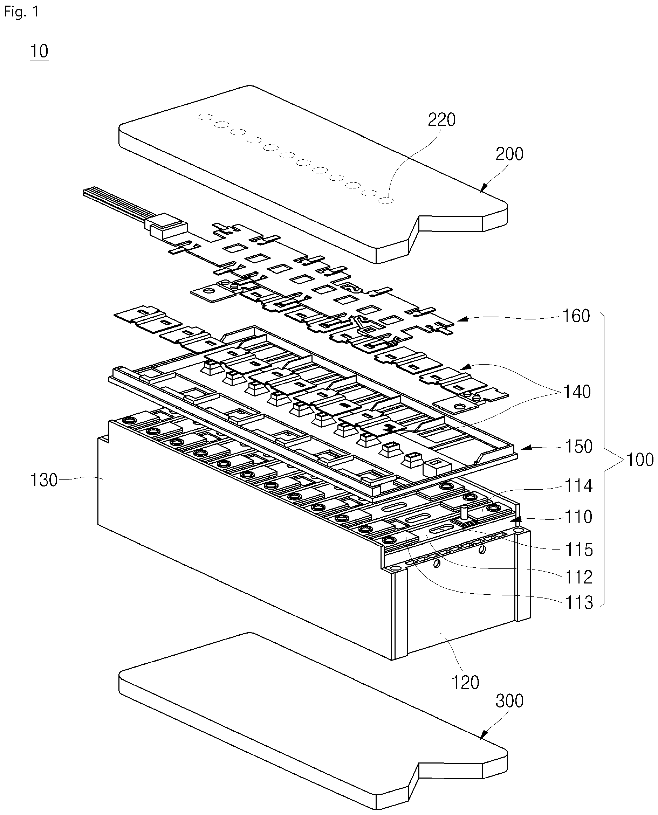

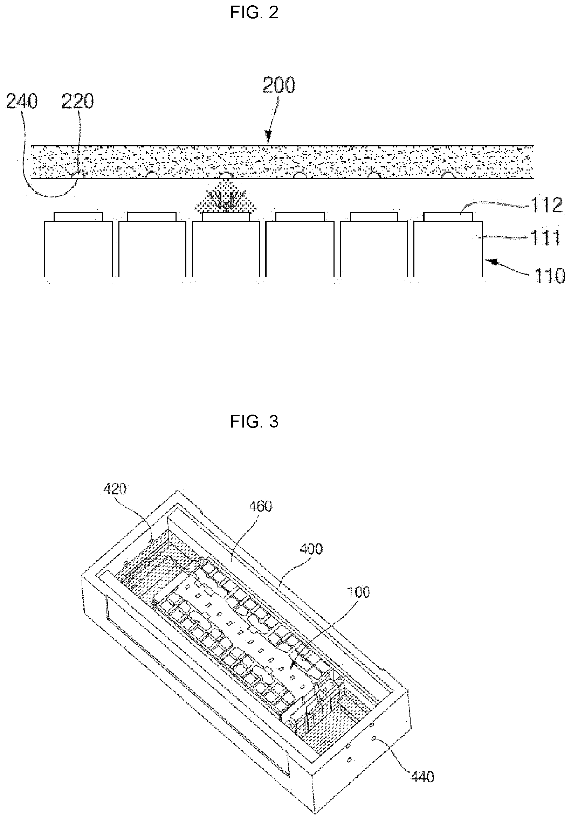

Hereinafter, a battery pack according to one embodiment of the present disclosure will be described in detail with reference to FIGS. 1 and 2.

FIG. 1 is an exploded perspective view illustrating a battery pack 10 according to one embodiment of the present disclosure. FIG. 2 is a simplified diagram illustrating battery cells 110 and an upper cooling unit 200 during the occurrence of a fire in one of the battery cells 110.

A battery pack 10 according to one embodiment of the present disclosure may include a battery module 100, an upper cooling unit 200, and a lower cooling unit 300.

As shown in FIG. 1, the battery module 100 may include a plurality of battery cells 110, a pair of end plates 120, a pair of side plates 130, a plurality of bus bars 140, a bus bar holder 150, and a circuit board 160.

In one or more embodiments, each of the battery cells 110 may be a lithium ion secondary battery having a rectangular parallelepiped shape. The plurality of battery cells 110 may be arranged in a row in a direction. In one or more embodiments, the plurality of battery cells 110 may be arranged so that relatively wide plate surfaces of the battery cells 110 face each other. The battery cells 110 adjacent to each other may be arranged in close contact with each other. In one or more embodiments, a spacer of an organic material or inorganic material may be between the battery cells 110 adjacent to each other to prevent heat propagation between the battery cells 110.

Each battery cell 110 may include a rectangular parallelepiped-shaped case 111, an electrode assembly accommodated in the case 111, and a cap plate 112 for sealing an opening of the case 111. The electrode assembly is accommodated in the case 111 with an electrolyte (e.g., liquid, gel, or solid electrolyte). The electrolyte may include a lithium salt such as LiPF₆, LiBF₄, or the like having an organic solvent such as ethylene carbonate (EC), propylene carbonate (PC), diethyl carbonate (DEC), ethylmethyl carbonate (EMC), or dimethyl carbonate (DMC). The case 111 may be made of a metal, such as aluminium or stainless steel.

The electrode assembly may be a jelly roll type electrode assembly in which a positive electrode plate and a negative electrode plate are wound with a separator therebetween, or the electrode assembly may be a stack type electrode assembly in which the positive electrode plate and the negative electrode plate are stacked with a separator therebetween. The positive electrode plate and the negative electrode plate may each include a coated region of a current collector, such as a thin metal foil which may be coated with an active material, and an uncoated region of the current collector not coated with the active material. In one or more embodiments, the coating region of the positive electrode plate may include an active material, such as a transition metal oxide, on a base material that is a metal foil, such as aluminium foil. In one or more embodiments, the coating region of the negative electrode plate may include an active material, such as carbon, graphite, or the like, on a base material that is a metal foil, such as a copper or nickel foil.

The uncoated region (a positive electrode uncoated region) of the positive electrode plate may be at one side end portion of the positive electrode plate in a longitudinal direction of the positive electrode plate. The uncoated region (a negative electrode uncoated region) of the negative electrode plate may be at one side end portion of the negative electrode plate in a longitudinal direction of the negative electrode plate. The positive electrode uncoated region and the negative electrode uncoated region may be located on opposite side surfaces of the coated region. Positive electrode tabs may be connected to the positive electrode uncoated region, and negative electrode tabs may be connected to the negative electrode uncoated region.

The cap plate 112 is coupled to the case 111 and covers the opening of the case 111. The cap plate 112 includes a positive electrode terminal 113 and a negative electrode terminal 114 protruding to the outside and electrically connected to the positive and negative electrode plates of the electrode assembly, respectively. Further, a vent hole 115, which communicates with the inside of the case 111, may be in the cap plate 112. A vent member including a notch which is configured to be opened by a preset pressure may be mounted on the vent hole 115.

The positive electrode terminal 113 may be electrically connected to the positive electrode plate through the positive electrode tab. The negative electrode terminal 114 may be electrically connected to the negative electrode plate through the negative electrode tab. A terminal connection member for electrically connecting the positive electrode terminal 113 and the positive electrode tab may be between the positive electrode terminal 113 and the positive electrode tab. The terminal connection member may be in a hole in the positive electrode terminal 113 and a lower portion of the terminal connection member may be welded to the positive electrode tab. Likewise, a terminal connection member may be between the negative electrode terminal 114 and the negative electrode tab.

A pair of end plates 120 are arranged to face the battery cells 110 at both ends among the plurality of battery cells 110. A pair of side plates 130 are orthogonally (or substantially orthogonally) coupled to the pair of end plates 120. Referring to FIG. 1, the pair of end plates 120 are in contact with the battery cells 110 at both ends and support a plurality of battery cells 110 in front and rearward directions. The pair of side plates 130 support the plurality of battery cells 110 in right and left directions.

The plurality of bus bars 140 are electrically connected to each of the plurality of battery cells 110. In one or more embodiments, the positive electrode terminals 113 and the negative electrode terminals 114 of the battery cells 110 adjacent to each other may be electrically connected through the bus bar 140. Thus, because the plurality of battery cells 110 are electrically connected to each other, the battery pack may be used as a power device. The bus bar 140 may be connected to the positive electrode terminal 113 and the negative electrode terminal 114 in any suitable method, such as welding or the like.

The bus bar holder 150 may be on the cap plate 112 and support the plurality of bus bars 140. A plurality of through holes through which the positive electrode terminals 113 and the negative electrode terminals 114 are exposed may be in the bus bar holder 150. Accordingly, the bus bars 140 may be electrically connected to the positive electrode terminals 113 and the negative electrode terminals 114. The bus bar holder 150 may be made of an insulating material. Regions of the battery pack 10 except for the bus bars 140 and the positive electrode terminals 113 and the negative electrode terminals 114 may be insulated by the bus bar holder 150.

The circuit board 160, on which various circuits and components are mounted, may be on the bus bar holder 150. The bus bars 140 are electrically connected to the circuit board 160. The circuit board 160 is electrically connected to the outside of the battery pack 10 through a separate connector.

The upper cooling unit 200 may be on the battery module 100. A coolant is accommodated (e.g., filled, included) in the upper cooling unit 200. The lower cooling unit 300 may be under the battery module 100. The coolant is accommodated (e.g., filled, included) in the lower cooling unit 300. In one or more embodiments, the upper cooling unit 200 and the lower cooling unit 300 are in contact with an upper portion and a lower portion of the battery module 100, respectively. Accordingly, the coolant is configured to cool the battery module 100 by absorbing heat from each of the upper portion and the lower portion of the battery module 100 when flowing through internal flow paths of the upper cooling unit 200 and the lower cooling unit 300. Thus, a temperature imbalance issue in the battery cells 110 may be addressed as the cooling units come into contact with both the upper portion and the lower portion of the battery module 100. That is, a temperature deviation in the battery cells 110 may be reduced, and accordingly a current imbalance may be decreased and the lifespan of the battery cells 100 may be increased.

In the related art, only lower portions of the battery cells are cooled, and therefore an upper and lower temperature imbalance of roughly 23 °C may occur in the battery cells under a fast-charging condition. This upper and lower temperature imbalance causes the current imbalance and deterioration of battery cell performance. For instance, it is known that solid electrolyte interphase (SEI) thermal decomposition occurs in the upper portions and a Li plating phenomenon occurs in the lower portions, which adversely affects the lifespan. Accordingly, uniform (or substantially uniform) temperature distribution of the battery cells addresses electrical issues and lifespan issues.

In one or more embodiments, a plurality of spray holes 220 are in the upper cooling unit 200 corresponding to the vent holes 115 of the plurality of battery cells 110. In response to a fire occurring in at least one of the plurality of battery cells 110, the coolant in the upper cooling unit 200 is sprayed through the spray hole 220 corresponding to the battery cell 110 where the fire occurs.

The plurality of spray holes 220 may be in a lower surface of the upper cooling unit 200. Shapes of the spray holes 220 may correspond to shapes of the vent holes 115. In one or more embodiments, the vent holes 115 have oval shapes and the spray holes 220 may also have oval shapes. Furthermore, in one or more embodiments, the spray holes 220 may have larger sizes (e.g., larger diameters) than the vent holes 115.

The plurality of spray holes 220 are closed when no fire occurs in the battery cells 110. In response to a fire occurring, the spray hole 220 corresponding to the battery cell 110 where the fire occurs is configured to be opened. The spray hole 220 may be opened due to the heat of a vent gas ejected or discharged from the vent hole 115 of the battery cell 110 where the fire occurs.

FIG. 2 illustrates the battery cells 110 and the upper cooling unit 200 spaced apart from each other and a situation in which the coolant is sprayed through one of the spray holes 220 corresponding to the battery cell 110 in which a fire occurs. In the illustrated embodiment, the spray hole 220 may be closed by a film 240. According to the embodiment, the film 240 may be coated on or adhered to the upper cooling unit 200 to block the spray hole 220. In one or more embodiments, the upper cooling unit 200 may include one or more plugs coupled to the spray holes 220.

In one or more embodiments, the film 240 is configured to melt due to the vent gas ejected from one or more of the vent holes 115. In one or more embodiments, the film 240 may be polyethylene (PE), polypropylene (PP), polyvinyl chloride (PVC), polystyrene (PS), an acrylonitrile butadiene styrene copolymer (ABS) resin, an acrylonitrile styrene copolymer (AS) resin, a methacrylic resin (PMMA), polyvinyl alcohol (PVA), or polyvinylene chloride (PVDC). In one or more embodiments, a melt temperature of the film 240 may be 150 °C in response to the fire occurring in the battery cell. Accordingly, in response to a temperature of the vent gas exceeding in response to the fire occurring in the battery cell 150 °C, the film 240 may be melted. In response to the film 240 melting, the spray hole 220 may be opened and the coolant in the upper cooling unit 200 may be sprayed onto the vent hole 115 of the battery cell 110 in which the fire occurs through the spray hole 220.

The upper cooling unit 200 is on the battery module 100 and is configured to cool the battery module 100. In response to a fire occurring, the upper cooling unit 200 may operate like a sprinkler and spray the coolant onto the upper portions of the battery cells 110 to immediately (or substantially immediately) extinguish the fire in the battery cells 110. Accordingly, heat propagation to other battery cells 110 adjacent to the battery cell 110 where the fire occurs may be suppressed. That is, since the fire may be extinguished immediately (or substantially immediately) and the heat propagation may be prevented even when the battery cell 110 reaches thermal runaway, the safety of the battery pack may be improved.

In one or more embodiments, the coolant may be a thermally conductive material configured to cool the battery cells 110 when no fire occurs and to act as a fire extinguishing agent in response to a fire occurring. In one or more embodiments, the coolant may be propylene glycol. Propylene glycol is effective as both a thermally conductive material and a fire extinguishing agent, is harmless to the human body, and is inexpensive. Ethylene glycol, which is a coolant utilized in many internal combustion engine vehicles, has excellent performance and is inexpensive, but is harmful to the human body.

Furthermore, in one or more embodiments, the battery pack may include a fire detection unit configured to detect a sudden temperature increase of the battery module 100 and/or the generation of combustion gas.

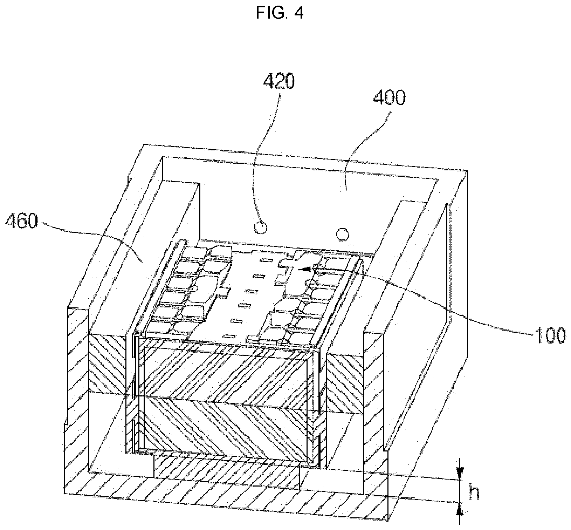

A battery pack according to another embodiment of the present disclosure will now be described with reference to FIGS. 3 and 4.

FIG. 3 is a perspective view illustrating the battery pack according to another embodiment of the present disclosure. FIG. 4 is a cross-sectional view of FIG. 3.

A battery pack 10 according to another embodiment of the present disclosure may include a battery module 100, an upper cooling unit 200, and a case 400. The battery module 100 and the upper cooling unit 200 are the same as described above, and the upper cooling unit 200 is omitted in FIGS. 3 and 4. Hereinafter, the description will focus on the case 400 and a structure in which a portion of the battery module 100 is submerged in a coolant in response to a fire occurring.

In one or more embodiments, the case 400 may have a rectangular parallelepiped shape, and may accommodate the battery module 100 therein. A coolant inlet 420 is in one side surface of the case 400. A coolant outlet 440 is in the other side surface (e.g., the opposite side surface) of the case 400. A coolant may be filled in the case 400. A pair of supports 460 may be provided to face each other in the case 400 on opposite sides of the battery module 100. In one or more embodiments, the supports 460 may extend in a longitudinal direction of the case 400.

A position of the battery module 100 may be fixed in the case 400 by fixing the battery module 100 to the supports 460 through fastening (e.g., screwing) and/or laser welding. In the embodiment shown in FIG. 4, the battery module 100 may be spaced apart from a bottom surface of the case 400 by a preset height h. In one or more embodiments, a lower portion of each support 460 may be bent and extend to the inside of the case 400 to support the battery module 100. In one or more embodiments, the preset height h may have the same (or substantially the same) value as a thickness of one of the battery cells 110 with respect to a direction in which a plurality of battery cells 110 are aligned.

In one or more embodiments, during normal operating conditions (i.e., no fire occurs in the battery cells 110), the coolant is filled in the case 400 to the certain height h from a bottom surface of the case 400. The coolant may be in contact with at least the bottom surface of the battery module 100. Accordingly, the coolant in the case 400 may serve to cool the battery module 100 by absorbing heat from the battery module 100. In one or more embodiments, because the coolant in the case 400 serves to cool a lower portion of the battery module 100, the lower cooling unit 300 of the above-described embodiment may be replaced with a bottom plate for supporting the plurality of battery cells 110 (e.g., the lower cooling unit 300 may be omitted).

In response to a fire occurring in at least one of the plurality of battery cells 110, the coolant is introduced into the case 400 through the coolant inlet 420. Accordingly, the battery module 100 may be submerged in the coolant. In one or more embodiments, approximately one-third to approximately one-half of the height of the battery module 100 may be submerged in the coolant. However, the present disclosure is not limited thereto, and even during normal operation (i.e., when no fire occurs), a state in which approximately one-third to approximately one-half of the battery module 100 may be submerged in the coolant.

In the embodiment, because the lower portion of the battery module 100 is submerged in the coolant during normal operating conditions and the upper cooling unit 200 is configured to spray the coolant in response to the occurrence of a fire, the upper and lower portions of the battery module 100 may be cooled. Further, the upper cooling unit 200 may serve as a sprinkler when a fire occurs.

In response to a fire occurring in one or more of the battery cells 110, the coolant is sprayed from above and a portion of the battery module 100 is submerged in the coolant, and thus the fire may be immediately (or substantially immediately) extinguished. Further, heat propagation to other battery cells 110 adjacent to the battery cell 110 where the fire occurs may be suppressed. That is, since the fire may be extinguished immediately (or substantially immediately) and the heat propagation may be prevented even when the battery cell 110 reaches thermal runaway, safety of the battery pack may be improved.

Furthermore, in one or more embodiments, only the lower portion of the battery module 100 is submerged in the coolant, and thus the bus bars 140 and a circuit board 160 at the upper portion of the battery module 100 may be separated from the coolant. In addition, because only the portion of the battery module 100 is submerged in the coolant, a height of the case 400 does not need to be higher than a height of the battery module 100. Accordingly, the weight of the case 400 and the weight of the coolant may be reduced, thereby lightening the overall weight of the battery pack.

Propylene glycol may be used as the coolant in one or more embodiments.

Furthermore, in one or more embodiments, a fire detection unit configured to detect a sudden temperature increase of the battery module 100 and/or generation of combustion gas may be included. In response to the sudden temperature increase of the battery module 100 and/or the generation of the combustion gas detected by the fire detection unit, the coolant may be introduced (e.g., immediately or substantially immediately) into the case 400 through the coolant inlet 420.

The coolant which comes out of the coolant outlet 440 circulates again through the coolant inlet 420, and the coolant which comes out of the coolant outlet 440 may enter the coolant inlet 420 after being cooled through a chiller. In this manner, the coolant may be circulated in a closed-loop manner. In one or more embodiments, the temperature of the coolant may be maintained at about (approximately) 25 °C.

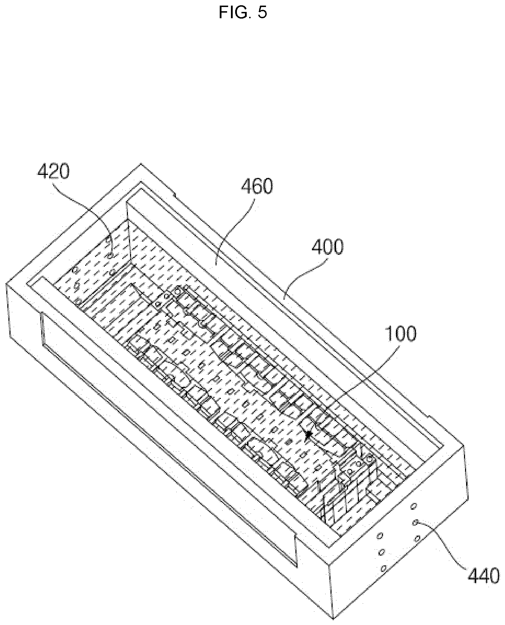

A battery pack according to still another embodiment of the present disclosure will be described in detail with reference to FIG. 5.

FIG. 5 is a perspective view illustrating the battery pack according to still another embodiment of the present disclosure.

The battery pack according to still another embodiment of the present disclosure may include a battery module 100 and a case 400. Because the battery module 100 is the same as described above, hereinafter, the case 400 and a structure in which the entire battery module 100 is submerged when a fire occurs will be mainly described.

The case 400 may have a rectangular parallelepiped shape as described in FIG. 4, and may accommodate the battery module 100 therein. A coolant inlet 420 is in one side surface of the case 400, and a coolant outlet 440 is in the other side surface (e.g., an opposite side surface) of the case 400. A coolant is filled in the case 400. In one or more embodiments, the battery module 100 may be fixed to a pair of supports 460 and spaced apart from a bottom surface of the case 400 by a preset height h. Accordingly, because the coolant is filled in the case 400 to the certain height h from the bottom surface of the case 400 during normal operating conditions (i.e., no fire is occurring in any of the battery cells 110), the coolant may be in contact with a bottom surface of the battery module 100. Because the coolant in the case 400 serves to cool a lower portion of the battery module 100, the lower cooling unit 300 of the above-described embodiment may be replaced with a bottom plate for supporting a plurality of battery cells 110 (e.g., the lower cooling unit 300 may be omitted).

In one or more embodiments, the case 400 may have a height higher than a height of the battery module 100. Accordingly, in response to a fire occurring in at least one of the plurality of battery cells 110, the coolant is introduced into the case 400 through the coolant inlet 420, and thus the entire battery module 100 may be submerged in the coolant (e.g., the entire height of the battery module 100 may be submerged in the coolant). However, the present disclosure is not limited thereto, and even when no fire occurs, a state in which the entire battery module 100 is submerged in the coolant may be maintained.

In one or more embodiments, because the entire battery module 100 is submerged in the coolant, the upper cooling unit 200 described above may be omitted. Accordingly, in one or more embodiments, the upper cooling unit 200 may be replaced with a top plate coupled to a pair of end plates 120 and a pair of side plates 130 and thus covers an upper surface of the battery module 100.

Thus, in response to a fire occurring, because the entire battery module 100 is submerged in the coolant, the fire may be immediately (or substantially immediately) extinguished. Further, heat propagation to other battery cells 110 adjacent to the battery cell 110 where the fire occurs may be suppressed. That is, because the fire may be extinguished immediately (or substantially immediately) and the heat propagation may be prevented even when the battery cell 110 reaches thermal runaway, the safety of the battery pack may be improved. Further, in response to the thermal runaway occurring, the coolant may serve as a damper to suppress an explosive force.

Propylene glycol may be utilized as the coolant in one or more embodiments.

Furthermore, in one or more embodiments, a fire detection unit configured to detect a sudden temperature increase of the battery module 100 and/or generation of combustion gas may be included. In response to the sudden temperature increase of the battery module 100 and/or the generation of the combustion gas detected by the fire detection unit, the coolant may be introduced (e.g., immediately or substantially immediately) into the case 400 through the coolant inlet 420.

The coolant which comes out of the coolant outlet 440 circulates again through the coolant inlet 420, and the coolant which comes out of the coolant outlet 440 may enter the coolant inlet 420 after being cooled through a chiller. In this manner, the coolant may be circulated in a closed-loop manner. Accordingly, the temperature of the coolant may be maintained at about (approximately) 25 °C.

According to an embodiment of the present disclosure, in response to a fire occurring in a battery pack, a coolant can be sprayed onto the battery pack from above to serve as a sprinkler. In one or more embodiments, the fire can be extinguished and heat propagation can be suppressed by submerging at least a portion of the battery pack in the coolant. That is, since the fire can be extinguished immediately and the heat propagation can be prevented even when a battery cell reaches thermal runaway, safety of the battery pack can be improved.

Further, when the coolant is in contact with an upper portion and a lower portion of the battery pack, an issue of a temperature imbalance in the battery cell can be addressed. That is, a temperature deviation in the battery cells can be reduced, and accordingly, a current imbalance can be decreased and a battery cell lifespan can be increased.

Further, propylene glycol can act as the coolant of the battery cells when no fire occurs and can act as a fire extinguishing agent when a fire occurs, and thus it is effective as well as being harmless to the human body.

What has been described above are only some embodiments for implementing the present disclosure, and the present disclosure is not limited to the above-described embodiments, and as claimed in the following claims, the present disclosure extends to the extent that various modifications may be made by anyone skilled in the art without departing from the gist of the present disclosure.

## Claims

1. A battery pack comprising:
a plurality of battery cells comprising a plurality of vent holes;
an upper cooling unit on the battery cells, the upper cooling unit comprising a coolant and a plurality of spray holes; and
a lower cooling unit in contact with a lower portion of the plurality of battery cells, the lower cooling unit comprising the coolant,
wherein the plurality of spray holes in the upper cooling unit correspond to the plurality of vent holes of the plurality of battery cells, and
wherein the upper cooling unit is configured to spray the coolant through a spray hole of the plurality of spray holes in response to a fire occurring in a corresponding battery cell of the plurality of battery cells.

2. The battery pack of claim 1, wherein the upper cooling unit is in contact with the plurality of battery cells.

3. The battery pack of claim 1 or claim 2, wherein the plurality of spray holes has larger diameters than the plurality of vent holes.

4. The battery pack of any one of claims 1 to 3, wherein the spray hole is configured to open in response to the fire occurring in the corresponding battery cell.

5. The battery pack of claim 4, wherein the spray hole is configured to open in response to heat of a vent gas ejected from a vent hole of the plurality of vent holes of the corresponding battery cell in which the fire occurs.

6. The battery pack of any one of claims 1 to 5, wherein the coolant is propylene glycol.

7. The battery pack of any one of claims 1 to 6, further comprising a fire detection unit configured to detect a temperature increase of at least one of the plurality of battery cells or generation of a combustion gas.

8. A battery pack comprising:
a plurality of battery cells;
a case accommodating the plurality of battery cells;
a coolant inlet in one side surface of the case; and
a coolant outlet in another side surface of the case,
wherein the battery pack is configured to introduce a coolant into the case through the coolant inlet and to submerge at least portions of the battery cells in the coolant in response to a fire occurring in a battery cell of the plurality of battery cells.

9. The battery pack of claim 8, wherein the plurality of battery cells is spaced apart from a bottom surface of the case by a preset height.

10. The battery pack of claim 9, wherein the coolant is filled in the case to a preset height from the bottom surface of the case when the fire is not occurring in the battery cell, and wherein the coolant is in contact with a bottom surface of the plurality of battery cells.

11. The battery pack of claim 9 or claim 10, wherein the preset height is same as a thickness of the battery cell along a direction in which the plurality of battery cells are aligned.

12. The battery pack of any one of claims 8 to 11, wherein:
a height of the case is higher than a height of the battery cell; and
the battery pack is configured to submerge an entirety of the height of the battery cell in the coolant in response to the fire occurring in the battery cell.

13. The battery pack of any one of claims 8 to 11, wherein the battery pack is configured to submerge approximately one-third to approximately one-half of a height of the battery cell in response to the fire occurring in the battery cell.

14. The battery pack of any one of claims 8 to 13, wherein the coolant is propylene glycol.

15. The battery pack of any one of claims 8 to 14, further comprising a fire detection unit configured to detect a temperature increase of the plurality of battery cells or generation of a combustion gas.
